# EUROPEAN PATENT APPLICATION

(11) **EP 4 546 668 A1**
(43) Date of publication of application: **30.04.2025**
(21) Application number: 23884664.6
(22) Date of filing: 24.10.2023
(51) Int. Cl.: H04B 10/2581

(54) **OPTICAL-MODE MODULATION DEVICE AND PHOTONIC CHIP**

(30) Priority: 03.11.2022 CN 202211369871
(71) Applicant: Nanjing Lycore Technologies Co., Ltd., Nanjing, Jiangsu 210000 (CN)
(72) Inventor: LIANG, Hanxiao, Suzhou, Jiangsu 215123 (CN); SONG, Yipin, Suzhou, Jiangsu 215123 (CN); ZHOU, Yingcong, Suzhou, Jiangsu 215123 (CN); WU, Haicang, Suzhou, Jiangsu 215123 (CN); MAO, Wenhao, Suzhou, Jiangsu 215123 (CN); SONG, Shiwei, Suzhou, Jiangsu 215123 (CN); SUN, Weiqi, Suzhou, Jiangsu 215123 (CN); YU, Qingyang, Suzhou, Jiangsu 215123 (CN); ZHANG, Zhouyu, Suzhou, Jiangsu 215123 (CN)
(74) Representative: Reddie & Grose LLP
(86) International application number: PCT/CN2023/126208
(87) International publication number: WO 2024/093732

(57) **Abstract**

The present disclosure provides an optical-mode modulation device and a photonic chip. The optical-mode modulation device includes: a mode separation element, including an optical signal input end, a first output end configured to output a TE-mode optical signal, and a second output end configured to output a TM-mode optical signal; a first branch optical path connected to the first output end and a second branch optical path connected to the second output end, where the first branch optical path is provided with an optical-mode converter for converting the TE-mode optical signal into the TM-mode optical signal, or the second branch optical path is provided with an optical-mode converter for converting the TM-mode optical signal into the TE-mode optical signal; a phase modulation module configured to modulate a phase difference between the first branch optical path and the second branch optical path based on a set optical-power allocation proportion; and a Mach-Zehnder modulator, including a first input end and a second input end configured to respectively receive, from the first branch optical path and the second branch optical path, two branch optical signals which are both in a TE mode or a TM mode, and further including a modulated optical signal output end.

## Description

### CROSS REFERENCE

The present application refers to Chinese Patent Application No. 202211369871.1, filed on November 3, 2022 and entitled "OPTICAL-MODE MODULATION DEVICE AND PHOTONIC CHIP", which is incorporated herein by reference in its entirety.

### TECHNICAL FIELD

The present disclosure relates to the field of optoelectronic technologies, and in particular, to an optical-mode modulation device and a photonic chip.

### BACKGROUND ART

Photonic chips generally transmit guided-mode optical signals relying on dielectric optical waveguides in integrated optics or silicon-based optoelectronics by using light waves (electromagnetic waves) as the carrier of information transmission or data operation, allowing modulation, transmission, demodulation, etc., of optical signals and electrical signals to be integrated on the same substrate or chip.

Compared with electronic integrated circuits or electrical interconnect technologies, photonic integrated circuits and optical interconnects exhibit lower transmission losses, wider transmission bandwidths, smaller time delays, and greater resistance to electromagnetic interference. In addition, the optical interconnects may also be used to increase the communication capacity within a transmission medium by using a variety of multiplexing methods (e.g., wavelength-division multiplexing (WDM), mode-division multiplexing (MDM), etc.).

How to improve the operating performance of the photonic chip and reduce the transmission loss of light in the photonic chip is an important part of researches for those skilled in the art.

### SUMMARY OF THE INVENTION

Embodiments of the present disclosure provide an optical-mode modulation device and a photonic chip, to improve the operating performance of the photonic chip and reduce the transmission loss of light in the photonic chip.

According to an aspect of the present disclosure, there is provided an optical-mode modulation device. The device includes: a mode separation element, including an optical signal input end, a first output end, and a second output end, where the optical signal input end is configured to receive an input optical signal, the first output end is configured to output a TE-mode optical signal, and the second output end is configured to output a TM-mode optical signal; a first branch optical path and a second branch optical path, where the first branch optical path is connected to the first output end, the second branch optical path is connected to the second output end, and the first branch optical path is provided with an optical-mode converter for converting the TE-mode optical signal into the TM-mode optical signal, or the second branch optical path is provided with an optical-mode converter for converting the TM-mode optical signal into the TE-mode optical signal; a phase modulation module configured to modulate a phase difference between the first branch optical path and the second branch optical path based on a set optical-power allocation proportion; and a Mach-Zehnder modulator, including a first input end, a second input end, and a modulated optical signal output end, where the first input end is connected to the first branch optical path, and the second input end is connected to the second branch optical path, to respectively receive, from the first branch optical path and the second branch optical path, two branch optical signals which are both in a TE mode or a TM mode.

In some embodiments, both of the two branch optical signals output respectively from the first branch optical path and the second branch optical path are the TE-mode optical signals, and the second branch optical path is provided with the optical-mode converter for converting the TM-mode optical signals into the TE-mode optical signals.

In some embodiments, both of the two branch optical signals output respectively from the first branch optical path and the second branch optical path are the TM-mode optical signals, and the first branch optical path is provided with the optical-mode converter for converting the TE-mode optical signals into the TM-mode optical signals.

In some embodiments, the phase modulation module includes a first phase modulator provided on the first branch optical path and/or a second phase modulator provided on the second branch optical path.

In some embodiments, the phase modulation module is an electro-optic phase modulation module or a thermo-optic phase modulation module.

In some embodiments, the optical-mode modulation device further includes: a light-splitting element, including a light-splitting element input end, a third output end, and a fourth output end, where the light-splitting element input end is connected to the modulated optical signal output end, the third output end is configured to output an operating signal, and the fourth output end is configured to output a monitoring signal; and a monitoring sensor configured to detect a signal strength of the monitoring signal.

In some embodiments, the optical-mode modulation device further includes: a feedback module separately connected to the monitoring sensor and the phase modulation module, and configured to output a first feedback signal to the phase modulation module and output a second feedback signal to a modulation electrode of the Mach-Zehnder modulator based on the signal strength of the monitoring signal.

According to an aspect of the present disclosure, there is provided an optical-mode modulation device. The device includes: a mode separation element configured to receive an input optical signal and separate the optical signal into a first optical signal in a first mode and a second optical signal in a second mode; a first branch optical path and a second branch optical path configured to respectively receive the first optical signal and the second optical signal which are output by the mode separation element, where the first branch optical path is provided with an optical-mode converter for converting the first optical signal from the first mode to the second mode; a phase modulation module configured to modulate a phase difference between the first branch optical path and the second branch optical path based on a set optical-power allocation proportion; and a Mach-Zehnder modulator configured to receive, from the first branch optical path and the second branch optical path, the first optical signal and the second optical signal which are both in the second mode, and modulate the first optical signal and the second optical signal to output a modulated optical signal.

In some embodiments, the phase modulation module includes a first phase modulator provided on the first branch optical path.

In some embodiments, the phase modulation module includes a second phase modulator provided on the second branch optical path.

According to one aspect of the present disclosure, there is provided a photonic chip including the optical-mode modulation device according to any one of the foregoing embodiments, where the mode separation element of the optical-mode modulation device is configured to be optically coupled to an optical fiber.

The optical-mode modulation device according to one or more embodiments of the present disclosure is applied in the photonic chip, which allows the input optical signal to be modulated to obtain an operating signal with a high mode purity, thereby making it possible to improve the operating performance of the photonic chip and reduce the transmission loss of light in the photonic chip.

It should be understood that the content described in this section is not intended to identify critical or important features of the embodiments of the present disclosure, and is not used to limit the scope of the present disclosure. Other features of the present disclosure will be easily understood through the following description.

### BRIEF DESCRIPTION OF THE DRAWINGS

More details, features, and advantages of the present disclosure are disclosed in the following description of exemplary embodiments with reference to the accompanying drawings, in which:
FIG. 1 is a block diagram of a structure of an optical-mode modulation device according to some exemplary embodiments of the present disclosure;
FIG. 2 is a block diagram of a structure of an optical-mode modulation device according to some other exemplary embodiments of the present disclosure;
FIG. 3 is a block diagram of a structure of an optical-mode modulation device according to still some exemplary embodiments of the present disclosure;
FIG. 4 is a block diagram of a structure of an optical-mode modulation device according to yet some exemplary embodiments of the present disclosure; and
FIG. 5 is a block diagram of a structure of a photonic chip according to some exemplary embodiments of the present disclosure.

### DETAILED DESCRIPTION OF EMBODIMENTS

Only some exemplary embodiments are briefly described below. As can be appreciated by those skilled in the art, the described embodiments can be modified in various ways without departing from the spirit or scope of the present disclosure. Accordingly, the accompanying drawings and the description are considered as illustrative in nature, rather than limited.

Usually, electromagnetic waves of light propagating in an optical fiber have unstable directions. At an optically coupled end face between the optical fiber and a photonic chip, the proportion of horizontal electric fields and vertical electric fields of the electromagnetic waves in the optical fiber is uncontrollable. For example, the vertical electric fields account for 10% of the electromagnetic waves, the horizontal electric fields account for 90% of the electromagnetic waves, and there may be other mixed proportions. An optical field mode of the horizontal electric fields in the optical fiber corresponds to a TE mode in a waveguide, and an optical field mode of the vertical electric fields in the optical fiber corresponds to a TM mode in the waveguide. The uncontrollable proportion of the horizontal electric fields and the vertical electric fields in the optical fiber leads to uncontrollable operating performance of the photonic chip, which in turn has a huge impact on the operating performance of the photonic chip and also brings about certain optical losses.

The embodiments of the present disclosure provide an optical-mode modulation device and a photonic chip. The optical-mode modulation device is applied in the photonic chip, which makes it possible to improve the operating performance of the photonic chip and reduce the transmission loss of light in the photonic chip.

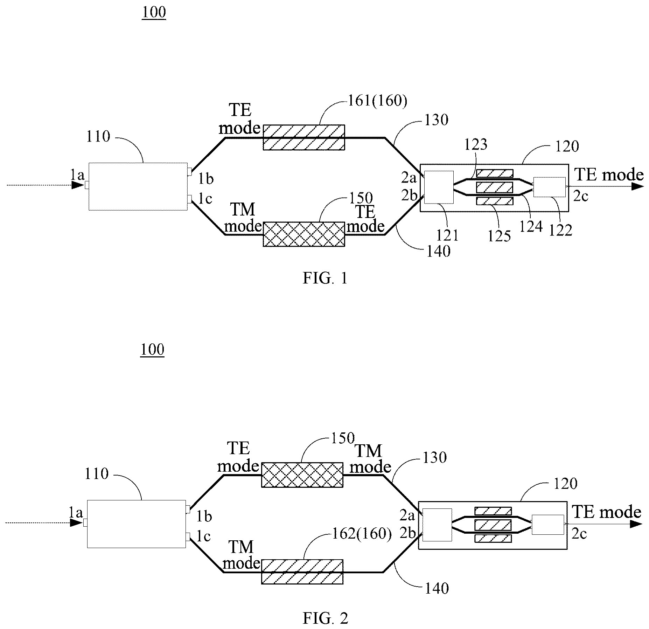

As shown in FIG. 1, the optical-mode modulation device 100 according to some embodiments of the present disclosure includes a mode separation element 110, a Mach-Zehnder modulator 120, a first branch optical path 130 and a second branch optical path 140 which are connected between the mode separation element 110 and the Mach-Zehnder modulator 120, and a phase modulation module 160.

The mode separation element 110 includes an optical signal input end 1a, a first output end 1b, and a second output end 1c, where the optical signal input end 1a is configured to receive an input optical signal, the first output end 1b is configured to output a TE-mode optical signal, and the second output end 1c is configured to output a TM-mode optical signal. The first branch optical path 130 is connected to the first output end 1b, the second branch optical path 140 is connected to the second output end 1c, and the second branch optical path 140 is provided with an optical-mode converter 150 for converting the TM-mode optical signal into the TE-mode optical signal (or the first branch optical path 130 is provided with an optical-mode converter for converting the TE-mode optical signal into the TM-mode optical signal). The phase modulation module 160 is configured to modulate a phase difference between the first branch optical path and the second branch optical path based on a set optical-power allocation proportion. The Mach-Zehnder modulator 120 includes a first input end 2a, a second input end 2b, and a modulated optical signal output end 2c, where the first input end 2a is connected to the first branch optical path 130, the second input end 2b is connected to the second branch optical path 140, to respectively receive, from the first branch optical path 130 and the second branch optical path 140, two branch optical signals which are both in a TE mode (or in a TM mode), and the modulated optical signal output end 2c is configured to output a modulated optical signal, i.e., a combined-wave signal output after the two branch optical signals having a target phase difference is modulated by the Mach-Zehnder modulator 120.

In the embodiments of the present disclosure, the mode separation element 110 (i.e., a TM/TE-mode separator) is configured to separate mixed horizontal electric field magnetic waves and vertical electric field magnetic waves in an input optical signal (e.g., an optical signal transmitted by an optical fiber) and accordingly output the TE-mode optical signals and the TM-mode optical signals via the first output end 1b and the second output end 1c. The optical-mode converter 150 is configured to convert the received optical signal from one magnetic wave mode to another magnetic wave mode, to output an optical signal that is in the same magnetic wave mode as that on the another branch optical path. The phase modulation module 160 is configured to modulate the phase difference between the first branch optical path 130 and the second branch optical path 140 based on the set optical-power allocation proportion, such that the two branch optical signals have a target phase difference corresponding to the optical-power allocation proportion when arriving at the first input end 2a and the second input end 2b of the Mach-Zehnder modulator 120, thereby satisfying an operating input requirement of the Mach-Zehnder modulator 120. For example, optical powers are allocated to the first branch optical path 130 and the second branch optical path 140 respectively according to a proportion of 100% and 0%, and after modulation by the phase modulation module 160, the first branch optical path and the second branch optical path differ in phase by an even multiple of Π.

As shown in FIG. 1, the basic structure of the Mach-Zehnder modulator 120 includes a light-splitting module 121, a light-combining module 122, two waveguide arms 123 and 124, and a modulation electrode 125. In the embodiments of the present disclosure, the light-splitting module 121 includes a first input end 2a and a second input end 2b, and the light-combining module 122 includes a modulated optical signal output end 2c.

The basic operating principle of the Mach-Zehnder modulator 120 is as follows. The modulation electrode 125 applies a modulation voltage to the two waveguide arms 123 and 124, to cause a change in the refractive index of the material of the waveguide arms, which, in turn, causes a change in the phase of the optical signals transmitted in the waveguide arms. The transmitted light in the two waveguide arms 123 and 124 may differ in phase by an odd or even multiple of II when reaching the light-combining module 122. When they differ in phase by an even multiple of Π, the light-combining module 122 outputs a coherently enhanced signal, and when they differ in phase by an odd multiple of II, the light-combining module 122 outputs a coherent cancellation signal.

As shown in FIG. 1, in some embodiments, the two branch optical signals in the same mode that reach the first input end 2a and the second input end 2b are both the TE-mode optical signals, and the second branch optical path 140 is provided with the optical-mode converter 150 for converting the TM-mode optical signals into the TE-mode optical signals. That is, the light is in the TM mode as it is input into the optical-mode converter 150, and is in the TE mode as it is output from the optical-mode converter 150.

As shown in FIG. 2, in some other embodiments, the two branch optical signals in the same mode that reach the first input end 2a and the second input end 2b are both the TM-mode optical signals, and the first branch optical path 130 is provided with the optical-mode converter 150 for converting the TE-mode optical signals into the TM-mode optical signals. That is, the light is in the TE mode as it is input into the optical-mode converter 150, and is in the TM mode as it is output from the optical-mode converter 150.

The specific conversion function of the optical-mode converter 150 may be determined according to the requirements of the photonic chip for the operating signal. For example, if the photonic chip requires a TE-mode operating signal, the optical-mode converter 150 is configured to convert one TM-mode optical signal separated by the mode separation element 110 into the TE-mode optical signal. For example, if the photonic chip requires a TM-mode operating signal, the optical-mode converter 150 is configured to convert one TE-mode optical signal separated by the mode separation element 110 into the TM-mode optical signal.

The optical-mode modulation device 100 according to the embodiments of the present disclosure is applied in the photonic chip, which allows the input optical signal to be modulated to obtain an operating signal with a high mode purity, thereby making it possible to improve the operating performance of the photonic chip and reduce the transmission loss of light in the photonic chip.

As shown in FIG. 1 and FIG. 2, in some embodiments of the present disclosure, the phase modulation module 160 includes a first phase modulator 161 provided on the first branch optical path 130 and/or a second phase modulator 162 provided on the second branch optical path 140. The first phase modulator 161 and the second phase modulator 162 may be, for example, an electro-optic phase modulator or a thermo-optic phase modulator, etc., which is not specifically limited in the present disclosure.

In the embodiments of the present disclosure, phase modulation may be performed on an optical signal on either branch optical path, or may be performed on optical signals on both branch optical paths, which is not specifically limited in the present disclosure.

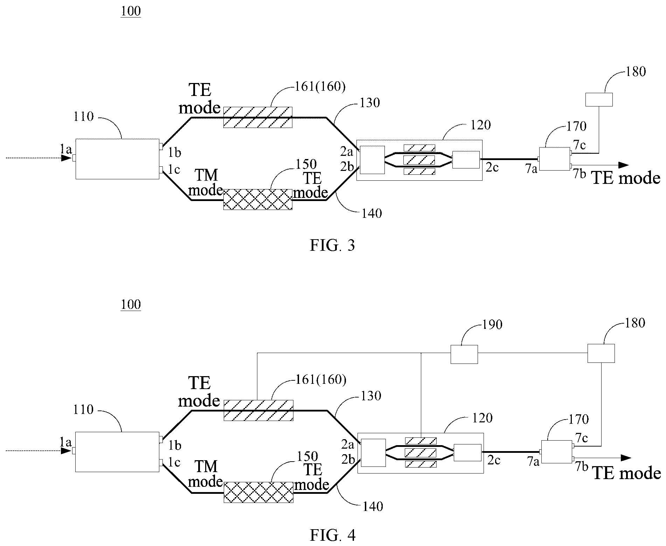

As shown in FIG. 3, in some embodiments of the present disclosure, the optical-mode modulation device 100 further includes a light-splitting element 170 and a monitoring sensor 180. The light-splitting element 170 includes a light-splitting element input end 7a, a third output end 7b, and a fourth output end 7c, where the light-splitting element input end 7a is connected to the modulated optical signal output end 2c, the third output end 7b is configured to output an operating signal, and the fourth output end 7c is configured to output a monitoring signal. The monitoring sensor 180 is configured to detect a signal strength of the monitoring signal.

In the embodiments of the present disclosure, the light-splitting element 170 refers to an optical-power allocation element, for example, a multiple-mode interference element having an optical-power allocation function.

Through the design in the embodiments, the input optical signal received by the optical-mode modulation device 100 and the operating state of the optical-mode modulation device 100 can be effectively monitored, and the phase modulation module 160 and the modulation electrode 125 of the Mach-Zehnder modulator 120 can be compensated for and modulated based on the signal strength of the monitoring signal that is obtained from the fourth output end 7c, thereby improving the accuracy of the operating signal output from the third output end 7b.

As shown in FIG. 4, in some embodiments, the optical-mode modulation device 100 further includes a feedback module 190. The feedback module 190 is separately connected to the monitoring sensor 180, the phase modulation module 160, and the modulation electrode 125 of the Mach-Zehnder modulator 120, and is configured to output a first feedback signal to the phase modulation module 160 and output a second feedback signal to the modulation electrode 125 of the Mach-Zehnder modulator 120 based on the signal strength of the monitoring signal. Through the design in the embodiments, under the premise that the operating signal meets an output accuracy requirement, the monitoring sensor 180 can perform strength detection on the monitoring signal in real time or according to a certain frequency, and the feedback module 190 can implement dynamic compensation control for the phase modulation module 160 and the modulation electrode 125.

Referring to FIG. 2, an embodiment of the present disclosure further provides an optical-mode modulation device 100, which includes a mode separation element 110, a first branch optical path 130, a second branch optical path 140, a phase modulation module 160, and a Mach-Zehnder modulator 120. The mode separation element 110 is configured to receive an input optical signal and separate the optical signal into a first optical signal in a first mode and a second optical signal in a second mode. The first branch optical path 130 and the second branch optical path 140 are configured to respectively receive the first optical signal and the second optical signal which are output by the mode separation element 110, where the first branch optical path 130 is provided with an optical-mode converter 150 for converting the first optical signal from the first mode to the second mode. The phase modulation module 160 is configured to modulate a phase difference between the first branch optical path 130 and the second branch optical path 140 based on a set optical-power allocation proportion. The Mach-Zehnder modulator 120 is configured to receive, from the first branch optical path 130 and the second branch optical path 140, the first optical signal and the second optical signal which are both in the second mode, and modulate the first optical signal and the second optical signal to output a modulated optical signal. The first mode and the second mode may each be a TE mode or a TM mode.

In some embodiments, the optical-mode modulation device 100 further includes a phase modulation module 160. The phase modulation module 160 includes a first phase modulator (not shown in the figure) provided on the first branch optical path 130 and/or a second phase modulator 162 provided on the second branch optical path 140.

In the embodiments, the optical-mode modulation device 100 is applied in a photonic chip, which makes it possible to improve the operating performance of the photonic chip and reduce the transmission loss of light in the photonic chip.

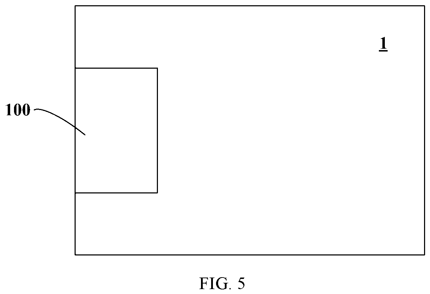

As shown in FIG. 5, an embodiment of the present disclosure further provides a photonic chip 1 including the optical-mode modulation device 100 according to any one of the foregoing embodiments, where the foregoing mode separation element 110 of the optical-mode modulation device 100 is configured to be optically coupled to an optical fiber. In addition to the optical-mode modulation device 100, the photonic chip 1 may further have provided thereon one or more devices, such as an electro-optic modulator, a splitter, a star coupler, a variable optical attenuator (VOA), an optical switch, a frequency comb, and an array waveguide grating (AWG), which are not shown in the figure.

Since the optical-mode modulation device 100 has the above beneficial effects, the operating performance of the photonic chip 1 can be significantly improved accordingly, and the transmission loss is also remarkably reduced.

It should be understood that, in this description, the orientations or positional relationships or dimensions denoted by the terms, such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial" and "circumferential", are the orientations or positional relationships or dimensions shown on the basis of the accompanying drawings, and these terms are used merely for ease of description, rather than indicating or implying that the device or element referred to must have particular orientations and be constructed and operated in the particular orientations, and therefore should not be construed as limiting the scope of protection of the present disclosure.

In addition, the terms such as "first", "second" and "third" are merely for descriptive purposes and should not be construed as indicating or implying relative importance or implicitly indicating the number of technical features indicated. Thus, the features defined with "first", "second" and "third" may explicitly or implicitly include one or more features. In the description of the present disclosure, the term "a plurality of" means two or more, unless otherwise explicitly and specifically defined.

In the present disclosure, unless expressly stated or defined otherwise, the terms such as "mounting", "connection", "connected" and "fixing" should be interpreted broadly, for example, they may be a fixed connection, a detachable connection, or an integrated connection; may be a mechanical connection, or an electrical connection, or communication; and may be a direct connection or an indirect connection by means of an intermediate medium, or may be internal communication between two elements or interaction between the two elements. For those of ordinary skill in the art, the specific meanings of the above terms in the present disclosure can be understood according to specific circumstances.

In the present disclosure, unless expressly stated or defined otherwise, the expression of the first feature being "above" or "below" the second feature may include the case that the first feature is in direct contact with the second feature, or the case that the first feature and the second feature are not in direct contact but are contacted via another feature therebetween. Furthermore, the first feature being "over", "above" or "on" the second feature includes the case where the first feature is directly or obliquely above the second feature, or merely indicates that the first feature is at a higher level than the second feature. The first feature being "below", "under" or "beneath" the second feature includes the case where the first feature is directly or obliquely below the second feature, or merely indicates that the first feature is at a lower level than the second feature.

This description provides many different implementations or examples that can be used to implement the present disclosure. It should be understood that these different implementations or examples are purely illustrative and are not intended to limit the scope of protection of the present disclosure in any way. On the basis of the disclosure of the description of the present disclosure, those skilled in the art will be able to conceive of various changes or substitutions. All these changes or substitutions shall fall within the scope of protection of the present disclosure. Therefore, the scope of protection of the present disclosure shall be subject to the scope of protection of the claims.

## Claims

1. An optical-mode modulation device, comprising:
a mode separation element, comprising an optical signal input end, a first output end, and a second output end, wherein the optical signal input end is configured to receive an input optical signal, the first output end is configured to output a TE-mode optical signal, and the second output end is configured to output a TM-mode optical signal;
a first branch optical path and a second branch optical path, wherein the first branch optical path is connected to the first output end, the second branch optical path is connected to the second output end, and the first branch optical path is provided with an optical-mode converter for converting the TE-mode optical signal into the TM-mode optical signal, or the second branch optical path is provided with an optical-mode converter for converting the TM-mode optical signal into the TE-mode optical signal;
a phase modulation module configured to modulate a phase difference between the first branch optical path and the second branch optical path based on a set optical-power allocation proportion; and
a Mach-Zehnder modulator, comprising a first input end, a second input end, and a modulated optical signal output end, wherein the first input end is connected to the first branch optical path, and the second input end is connected to the second branch optical path, to respectively receive, from the first branch optical path and the second branch optical path, two branch optical signals which are both in a TE mode or a TM mode.

2. The optical-mode modulation device according to claim 1, wherein
both of the two branch optical signals output respectively from the first branch optical path and the second branch optical path are the TE-mode optical signals, and the second branch optical path is provided with the optical-mode converter for converting the TM-mode optical signals into the TE-mode optical signals.

3. The optical-mode modulation device according to claim 1, wherein
both of the two branch optical signals output respectively from the first branch optical path and the second branch optical path are the TM-mode optical signals, and the first branch optical path is provided with the optical-mode converter for converting the TE-mode optical signals into the TM-mode optical signals.

4. The optical-mode modulation device according to claim 1, wherein
the phase modulation module comprises a first phase modulator provided on the first branch optical path and/or a second phase modulator provided on the second branch optical path.

5. The optical-mode modulation device according to claim 4, wherein
the phase modulation module is an electro-optic phase modulation module or a thermo-optic phase modulation module.

6. The optical-mode modulation device according to claim 4, further comprising:
a light-splitting element, comprising a light-splitting element input end, a third output end, and a fourth output end, wherein the light-splitting element input end is connected to the modulated optical signal output end, the third output end is configured to output an operating signal, and the fourth output end is configured to output a monitoring signal; and
a monitoring sensor configured to detect a signal strength of the monitoring signal.

7. The optical-mode modulation device according to claim 6, further comprising:
a feedback module separately connected to the monitoring sensor and the phase modulation module, and configured to output a first feedback signal to the phase modulation module and output a second feedback signal to a modulation electrode of the Mach-Zehnder modulator based on the signal strength of the monitoring signal.

8. An optical-mode modulation device, comprising:
a mode separation element configured to receive an input optical signal and separate the optical signal into a first optical signal in a first mode and a second optical signal in a second mode;
a first branch optical path and a second branch optical path configured to respectively receive the first optical signal and the second optical signal which are output by the mode separation element, wherein the first branch optical path is provided with an optical-mode converter for converting the first optical signal from the first mode to the second mode;
a phase modulation module configured to modulate a phase difference between the first branch optical path and the second branch optical path based on a set optical-power allocation proportion; and
a Mach-Zehnder modulator configured to receive, from the first branch optical path and the second branch optical path, the first optical signal and the second optical signal which are both in the second mode, and modulate the first optical signal and the second optical signal to output a modulated optical signal.

9. The optical-mode modulation device according to claim 8, wherein
the phase modulation module comprises a first phase modulator provided on the first branch optical path and/or a second phase modulator provided on the second branch optical path.

10. A photonic chip, comprising the optical-mode modulation device according to any one of claims 1 to 9, wherein the mode separation element of the optical-mode modulation device is configured to be optically coupled to an optical fiber.
